# EUROPEAN PATENT APPLICATION

(11) **EP 2 565 563 A1**
(43) Date of publication of application: **06.03.2013**
(21) Application number: 11179915.1
(22) Date of filing: 02.09.2011
(51) Int. Cl.: F25C 3/02

(54) **Ice making system using de-gassed water**

(71) Applicant: Joe Johnson Equipment, Inc., Innisfil ON L9S 3V6 (CA)
(72) Inventor: Dawe, Stephen Andrew, Concord, Ontario L4K 4W4 (CA); Johnson, Joseph Michael, Midhurst, Ontario L0L 1X0 (CA)
(74) Representative: Maiwald Patentanwalts GmbH

(57) **Abstract**

An Improved system for making ice for recreational use. The system using water de-gassed by double filtration. The de-gassed water removes the insulator factor from ice that causes ice dehydration, makes it possible to operate with ice at a temperature 2-3°F above that of existing recreational ice facilities while maintaining a high quality sheet of ice, produces an ice that is denser, more resilient to cuts and ruts and produces less snow development, all while lowering your energy consumption, permits ice to freeze faster and shows all painted lines and logos in the ice with greater clarity, and reduces carbon footprint, and benefits from decreased labour and refrigeration costs.

## Description

### FIELD

The present disclosure relates generally to a system for making ice using de-gassed water. More particularly, the present disclosure relates to a system for making ice for recreational use, such as ice skating, using water that has been processed to remove dissolved oxygen.

### BACKGROUND

Conventional methods for making ice for recreational use, such as a skating rink, include freezing layers of water on top of a base surface. The base surface is typically a concrete or a sand floor which is cooled by a liquid coolant flowed through a cooling system.

Typically, the ice is formed by freezing thin layers of water. The thin layers accumulate to form a thickness of ice. The ice is commonly painted at one or more of the intermediate layers, for example to show the red and blue lines, goal creases, and the like for hockey. In other instances, the entire ice surface may be painted white prior to painting colours to provide better visual contrast. To prevent the paint from being scratched, further layers are applied over the paint to protect it.

In the past, an ice surface was made by dragging a large hose onto the chilled floor and manually flooding it with hot water. Hot water was been used to remove oxygen and create a more dense and harder ice surface as it freezes to a more dense and harder ice surface which improves clarity, durability and playability. However, hot water flooding is more labour intensive and more costly including energy costs to heat the water. Generally, many labourers are required to keep the hose in constant motion, and to prevent it from melting through the already formed ice and/or smudging paint. Therefore, this manual flooding process using heated water is labour intensive and more expensive including increased costs to have more compressor running time for additional cooling, heating of water and labour.

Using cold water is less expensive than using hot water as it avoids the added energy costs associated with heating water and running compressors for cooling as well as increased labour costs. Also, since the cold water is less likely to melt through any ice already formed, using cold water is also less labour intensive. Cold water floods using oxygenated water however produce ice that is less dense, has more voids and is thus softer. This means bigger chips and ruts may be created by skates and more snow may build up during skating. Excessive snow is undesirable for skating because it impairs and slows the movement of the skates along the ice. Excessive snow is also undesirable in hockey as it impairs and slows the movement of the puck. Further, cold water floods result in ice which is typically cloudy and obscures the painted lines and logos. Further, the air voids have an insulating effect. This is problematic because the cooling systems for recreational ice are provided below the ice surface. Drawing the heat away through a more insulating layer of ice increases costs of maintaining the ice, and poses difficulties in keeping the upper ice surface cold and hard.

In addition to initial ice formation, ice surfaces are periodically resurfaced to eliminate the grooves and ruts made by skate blades. A standard technique is to use a resurfacing machine, one example of which is a resurfacer such as a Zamboni™. Conventional resurfacing machines are typically self-propelled and include a cutting blade to pick up snow and ice chips. The cutting blade is followed by a spreader cloth that is dragged over the ice surface. The resurfacing machines have a reservoir of water that is supplied to the spreader cloth. As the spreader cloth is dragged over the ice surface, the water is spread by the spreader cloth over the entire ice surface. Thus, a film of water is distributed over the ice surface by the spreader cloth. When the water freezes, a new top layer of ice is formed.

Unfortunately, the water layer freezes slowly taking some time to turn into ice, The length of time that it takes the thin layer of water to freeze into an ice sheet means that often there are wet spots or the like on the ice surface for the portion of the ice most recently passed over by the resurfacer when the users wish to recommence skating. Surface water also interferes with the free movement of the puck along the ice during ice hockey play. It is also believed that as the water slowly cools to form ice, gasses are absorbed into the water, which then creates more voids or freezing. Thus, there is a tendency for voids to form in the ice as it freezes which leads to a weak bond softer and cloudy ice surface even though hot water was used initially.

### SUMMARY

It is an object of the present disclosure to obviate or mitigate at least one disadvantage of previous known methods and apparatus for making ice for recreational use.

The traditional methods used to form and to resurface ice sheets result in an unacceptable quality of ice which is both soft and cloudy by reason of the voids, and is also energy intensive due to the added energy required to heat the water and run the compressors to cool the water to make ice. The voids weaken and otherwise detract from the playability of the ice sheets, This problem is amplified in indoor rinks with large spectator crowds such as hockey and figure skating events. The large spectator crowds tend to result in warm air temperatures which soften ice. Also, traditional methods are more energy intensive because of the energy required to heat the water and the additional energy required by the cooling compressors. It is desired to provide an apparatus and process to resurface an ice surface which reduces the heat load on the ice the formation of voids and thus create a harder, longer wearing and more durable ice surface that is more energy efficient.

It is, therefore, desirable to provide a system for making ice which is clearer, more resistant to damage and more energy efficient.

While the method and apparatus described herein is generally with respect to making ice for recreational use such as in hockey arenas, it could also have application for use with making ice for figure skating, curling rinks, speed skating tracks, luge and bobsleigh runs, and the like.

In its broadest sense, this application describes a method for making recreational ice using water which has been de-gassed using a membrane filtration device. In one aspect, the method involves installing a membrane filtration device to de-gas water used to make ice at a recreational facility. Preferably, this involves a membrane filtration device that is hooked up to the water supply that is provided to flood an ice surface Alternatively, a plurality of membrane filtration devices can be connected in series, for example where two membrane filtration devices are connected in series to provide a double membrane filtration device.

By using water that has been de-gassed to form ice, denser ice is formed due to a lack of air trapped in the ice. Also, upper layers of ice can be formed quickly while using less water. This is because the cooling is conducted better though the more dense ice, and the cooling is supplied from underneath a cooing surface on which the layers of ice are formed.

Further, using a membrane filtration de-gassing device is more efficient than heating water to remove oxygen. The membrane filtration de-gassing device can be easily retrofitted to an existing facility.

The method and apparatus contemplates the removal of all or substantially all of the dissolved gas, including oxygen, from the water before being applied to a surface to make ice. Using de-gassed water produces ice which is harder, faster, clearer and more durable, while reducing energy costs by mitigating costs in heating water and reducing compressor run times to make ice.

Some of the advantages obtained by the method, system and use of the membrane filtration device are: removal of the insulator factor from ice that causes ice dehydration and the ability to operate a facility with an ice temperature 2-3°F higher than without using the method and apparatus while maintaining a high quality sheet of ice; production of denser ice that is more resilient to cuts and ruts and produces less snow development; lower energy consumption in making and maintaining recreational ice; faster freezing ice with increased clarity to show painted lines and logos in the ice with greater clarity.

In a first aspect, the disclosure describes a process for making ice for recreational use, the process comprising the steps of: a) applying de-gassed water to a surface, the de-gassed water being de-gassed by a membrane vacuum device; and b) cooling the surface to freeze the de-gassed water as a layer of ice.

Preferably, the de-gassed water is at a temperature of between 40 °F and 110°F.

Preferably, the de-gassed water is applied to the surface manually using a hose and/or spray apparatus.

Preferably, the de-gassed water is applied to the surface using an ice resurfacing apparatus.

Preferably, the surface is one or more layers of ice.

Preferably, the steps a) and b) are repeated.

In another aspect, the disclosure describes a recreational ice making apparatus for making ice for recreational use, the apparatus having: a water de-gasser having a water inlet and a water outlet, the water inlet supplying water having dissolved gas and the water outlet discharging de-gassed water, the gas being removed by vacuum suction across a membrane filter.

Preferably, the apparatus further comprises a water applicator connected to the water outlet for applying the de-gassed water to the cold surface.

In another aspect, the disclosure describes a use of a membrane filtration water de-gasser for de-gassing water used to make ice for recreational use.

Preferably, the recreational use is skating.

Other aspects and features of the present disclosure will become apparent to those ordinarily skilled in the art upon review of the Mowing description of specific embodiments in conjunction with the accompanying figures.

### BRIEF DESCRIPTION OF THE DRAWINGS

Embodiments of the present disclosure will now be described, by way of example only, with reference to the attached Figures.

Figure 1 shows a top view of an ice skating facility;

Figure 2 shows a membrane vacuum device used with the facility shown in Figure 1; and

Figure 3 shows a schematic of two membrane filter devices connected in series..

### DETAILED DESCRIPTION

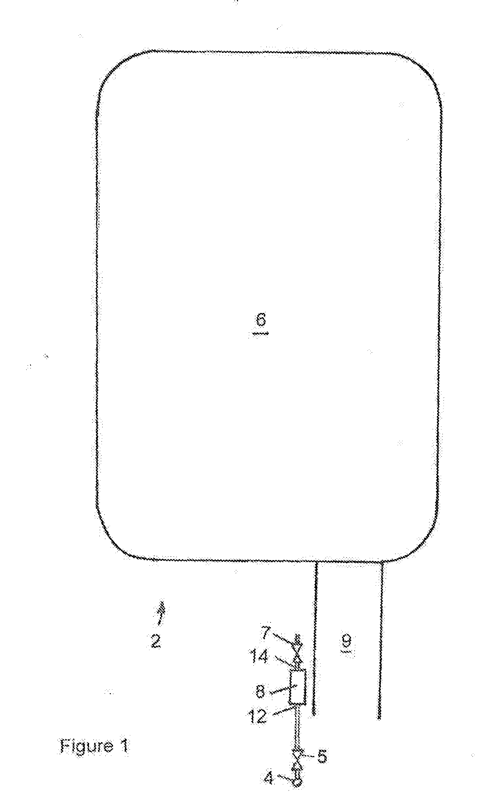

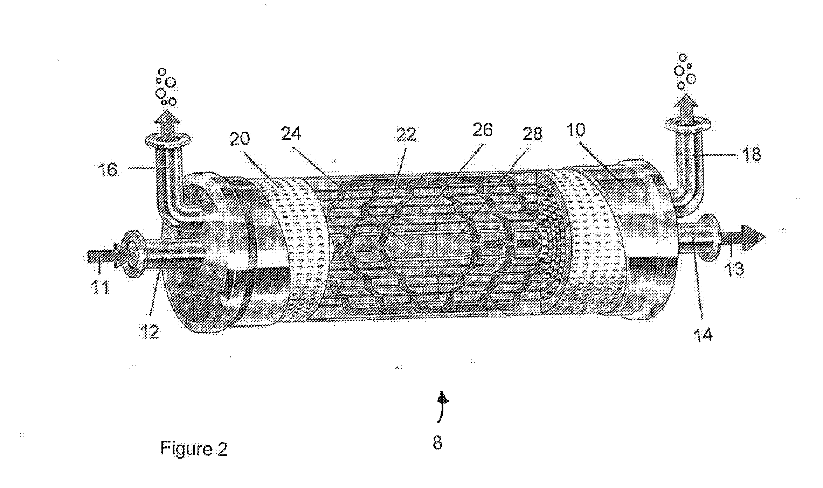

Figure 1 shows a top view of an ice skating facility 2. The ice skating facility 2 has a water supply 4 shown with a shut off valve 5. The shut off valve 5 is connected to a water inlet 12 of a membrane filtration device 8. The membrane filtration device 8 removes dissolved gasses including oxygen gas from the water to provide de-gassed water as is described in more detail with respect to Figure 2. The membrane filtration device 8 has a water outlet 14 which is attached to a second shut off valve 7.

The water supply 4 provides water for making ice. After de-gassing by the membrane filtration device 8, the water is used to flood a cooled surface 6 to form ice. For example, the cooled surface 6 has a cooling system (not shown) which is embedded therein. An access path 9 is provided to access the cooled surface 6 for flooding the cooled surface 6.

To make ice on the cooled surface 6, the de-gassed water is applied in layers. Many thin layers are applied to the cooled surface 6 to form ice. Initially, the de-gassed water is applied in layers by manual application, for example using a hose (not shown). A first layer of de-gassed water is applied and then permitted to cool by waiting for a period of time. After the first layer of ice has formed, a second layer of water is applied on top of the first layer and permitted to cool to form a second layer of ice. This process is continued until many layers of ice have formed.

For example, the water can be applied to the cooled surface 6 using a hose or spray apparatus (not shown). After several layers of ice have been formed, further layers of ice can be made using a conventional ice re-surfacing machine (not shown), such as a Zamboni™ . The ice re-surfacing machine is filled with de-gassed water from the membrane filtration device 8. Further, the de-gassed water can be heated after de-gassing if desired. Preferably, the de-gassed water is at a temperature between 40 of and 110°F.

Figure 2 shows an embodiment of the membrane filtration device 8. The membrane filtration device 8 has a cylindrical housing 10 having a water inlet 12 at one end and a water outlet 14 at an opposite end. Inlet water 11 entering the water inlet 12 has dissolved gases and de-gassed water 13 exiting the water outlet 14 has been de-gassed. The housing 10 has two gas outlets 16, 18 to discharge gas removed from the inlet water 11.

Inside the housing 10, a membrane cartridge 20 is provided with a plurality of individual hollow fiber membranes 22. Preferably, there are thousands of hollow fiber membranes 22. Preferably, the hollow fiber membranes 22 have an inner diameter of about 200 µm, and an outer diameter of about 300 µm. The hollow fiber membranes 22 have tiny pores which permit gasses to pass through but do not allow water to pass through.

The hollow fiber membranes 22 are connected to one of the gas outlets 16 or 18. A distribution tube 24 is connected to the water inlet 12. The distribution tube 24 has holes to permit the water to flow past the membrane fibers 22. A baffle plate 26 is provided within the housing 10 to divert the flow of water to a periphery of the cylindrical cartridge as shown. By causing a diversion of the flow of water to the periphery of the cylindrical membrane cartridge 20, the water is forced into contact with the plurality of hollow fiber membranes 22. After passing by the baffle 26, the water travels in a path back towards a water collection tube 28. The water collection tube 28 is connected to the water outlet 14 and, similar to the water distribution tube 24, the water collection tube 28 has holes to allow treated water to enter into the water collection tube 28 to be passed to the water outlet 14.

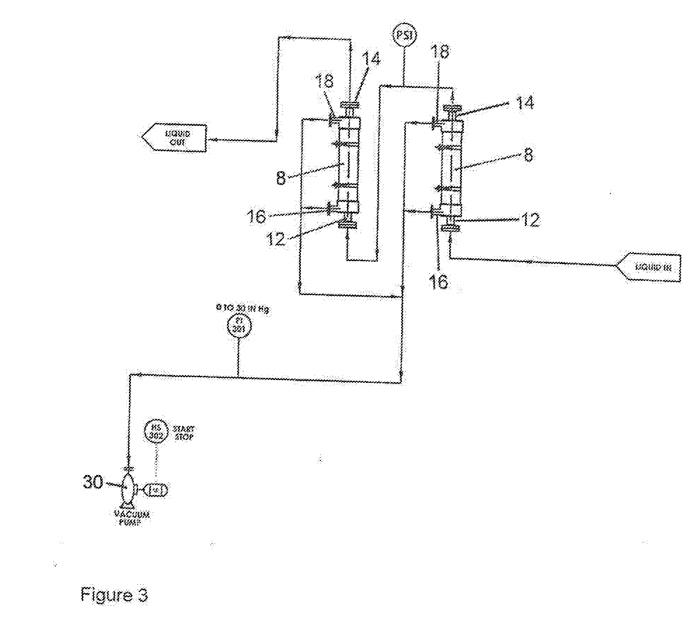

A vacuum pump 30, such as the one shown in Figure 3, is connected to the gas outlets 16 and 18 to provide suction. Dissolved gas in the water flowing past the hollow fiber membranes 22 are sectioned out of the water.

In applications where the inlet water requires additional de-gassing, for example where a higher flow of water is desired, a plurality of membrane filtration devices 8 can be connected in series. For example, Figure 3 shows a schematic where two membrane filtration devices 8 are connected in series. The first membrane filtration device 8 takes in water from the water inlet 12 and discharges de-gassed water from the water outlet 14. The water outlet 14 of the first membrane filtration device 8 is connected to the water inlet 12 of the second membrane filtration device 8. The second membrane filtration device 8 is provided to further de-gas the water received from the first membrane filtration device 8 and discharges the further de-gassed water through the water outlet 14.

A vacuum pump 30 is connected to each of the gas outlets 16 and 18 of both membrane filtration devices 8.

Although a description of forming ice for a skating rink has been described, it is contemplated that the invention is not so limited. The formation of ice using de-gassed water from a membrane filtration device could be for other recreational purposes, such as figure skating curling, speed skating, bobsledding, skeleton, luge, etc. The membrane filtration device can be easily fitted to existing facilities and used with existing apparatus to make ice.

In the preceding description, for purposes of explanation, numerous details are set forth in order to provide a thorough understanding of the embodiments, However, it will be apparent to one skilled in the art that these specific details are not required.

The above-described embodiments are intended to be examples only. Alterations, modifications and variations can be effected to the particular embodiments by those of skill in the art without departing from the scope, which is defined solely by the claims appended hereto.

## Claims

1. A process for making ice for recreational use, comprising the steps of:
a) applying de-gassed water to a surface, the de-gassed water being de-gassed by a membrane vacuum device; and
b) cooling the surface to freeze the de-gassed water as a layer of ice.

2. The process of claim 1, wherein the de-gassed water is at a temperature of between 40 of and 110 oF.

3. The process of claim 1, wherein the de-gassed water is applied to the surface manual using a hose and/or spray apparatus.

4. The process of claim 1, wherein the de-gassed water is applied to the surface using an ice resurfacing apparatus.

5. The process of claim 1, wherein the surface is one or more layers of ice.

6. The process of claim 1, wherein the steps a) and b) are repeated.

7. A recreational ice making apparatus for making ice for recreational use, the apparatus having:
a water de-gasser having a water inlet and a water outlet, the water inlet supplying water having dissolved gas and the water outlet discharging de-gassed water, the gas being removed by vacuum suction across a membrane filter.

8. The apparatus for making ice of claim 7, further comprising a water applicator connected to the water outlet for applying the de-gassed water to the cold surface.

9. Use of a membrane filtration water de-gasser for de-gassing water used to make ice for recreational use.

10. The use of claim 9, wherein the recreational use is skating.

## Amended claims

### Amended claims in accordance with Rule 137(2) EPC.

**1.** A process for making ice for recreational use, comprising the steps of:
a) applying de-gassed water to a surface; and
b) cooling the surface to freeze the de-gassed water as a layer of ice;
**characterized in that** the de-gassed water being de-gassed by a membrane vacuum device (8).

**2.** The process of claim 1, wherein the de-gassed water is at a temperature of between 4,4 °C (40 OF) and 43,3 °C (110 °F).

**3.** The process of claim 1, wherein the de-gassed water is applied to the surface manually using a hose and/or spray apparatus.

**4.** The process of claim 1, wherein the de-gassed water is applied to the surface using an ice resurfacing apparatus.

**5.** The process of claim 1, wherein the surface is one or more layers of ice.

**6.** The process of claim 1, wherein the steps a) and b) are repeated.

**7.** A recreational ice making apparatus for making ice for recreational use, the apparatus having:
a water de-gasser (4, 5, 7, 8, 12, 14) having a water inlet (12) and a water outlet (14),
the water inlet supplying water having dissolved gas and the water outlet discharging de-gassed water, **characterized in that** the gas being removed by vacuum suction across a membrane filter (8).

**8.** The apparatus for making ice of claim 7, further comprising a water applicator connected to the water outlet for applying the de-gassed water to the cold surface.

**9.** Use of a membrane filtration water de-gasser (4, 5, 7, 8, 12, 14) for de-gassing water used to make ice for recreational use.

**10.** The use of claim 9, wherein the recreational use is skating.
